(19) Europäisches Patentamt
European Patent Office
Office européen des brevets

(11) **EP 4 066 007 B1**

(12) **FASCICULE DE BREVET EUROPEEN**

(45) Date de publication et mention
de la délivrance du brevet:
**10.04.2024   Bulletin 2024/15**

(21) Numéro de dépôt: **20811011.4**

(22) Date de dépôt: **26.11.2020**

(51) Classification Internationale des Brevets (IPC):
**G01S 7/40** *(2006.01)*      **G05D 1/08** *(2006.01)*

(52) Classification Coopérative des Brevets (CPC):
**G01S 7/4026;** G01S 7/403; G01S 7/4034

(86) Numéro de dépôt international:
**PCT/EP2020/083519**

(87) Numéro de publication internationale:
**WO 2021/105289 (03.06.2021 Gazette 2021/22)**

(54) **SYSTÈME ET PROCÉDÉ D'HARMONISATION AUTOMATIQUE DE POSITION ET/OU D'ORIENTATION ENTRE UN ÉQUIPEMENT EMBARQUÉ SUR UN PORTEUR MOBILE ET UN RÉFÉRENTIEL DUDIT PORTEUR MOBILE**

SYSTEM UND VERFAHREN ZUR AUTOMATISCHEN HARMONISIERUNG DER POSITION UND/ODER AUSRICHTUNG ZWISCHEN EINER VORRICHTUNG AN BORD EINES MOBILEN TRÄGERS UND EINEM REFERENZRAHMEN DES MOBILEN TRÄGERS

SYSTEM AND METHOD FOR AUTOMATICALLY HARMONISING THE POSITION AND/OR ORIENTATION BETWEEN AN APPARATUS ON BOARD A MOBILE CARRIER AND A REFERENCE FRAME OF THE MOBILE CARRIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **28.11.2019   FR 1913375**

(43) Date de publication de la demande:
**05.10.2022   Bulletin 2022/40**

(73) Titulaire: **THALES**
**92400 Courbevoie (FR)**

(72) Inventeurs:
• **VEYRAC, Yoan**
**33700 MERIGNAC (FR)**

• **MONTIGNY, Richard**
**33700 MERIGNAC (FR)**
• **COTTRON, Rodolphe**
**33700 MERIGNAC (FR)**

(74) Mandataire: **Lavoix**
**2, place d'Estienne d'Orves**
**75441 Paris Cedex 09 (FR)**

(56) Documents cités:
**EP-A1- 0 814 347      WO-A1-2019/202072**
**FR-A1- 2 755 760      FR-A1- 3 000 219**
**US-A- 5 050 087**

**Description**

La présente invention concerne un système et un procédé d'harmonisation automatique de position et/ou d'orientation entre un équipement embarqué sur un porteur mobile et un référentiel dudit porteur mobile, par exemple un aéronef.

L'invention se situe dans le domaine de l'utilisation d'équipements embarqués sur porteurs mobiles, et trouve une application particulière dans le domaine des systèmes de radar aéroportés.

Dans ce domaine, il est nécessaire de connaître l'orientation précise de l'axe de visée du système de radar embarqué par rapport à un référentiel du porteur mobile, d'une part pour effectuer des traitements et compenser les mouvements du porteur dans le système de radar, et d'autre part pour afficher correctement les données de sortie du système de radar par rapport au porteur mobile.

Par exemple, des systèmes de radar comportant un ou plusieurs panneaux antennaires, fixés de manière distribuée à plusieurs endroits du porteur, sont utilisés. Le porteur mobile est par exemple un avion, un hélicoptère ou un drone.

De manière classique, il est possible d'effectuer un calibrage mécanique précis, grâce à des pions de centrage ou à des cales dédiées, pour fixer de manière connue la position et l'orientation du ou de chaque panneau antennaire par rapport au porteur. Néanmoins, une telle opération nécessite des pièces mécaniques et un assemblage précis, et n'est pas adaptée pour une utilisation dans laquelle les systèmes embarqués sont démontés/remontés régulièrement, par exemple pour maintenance ou en fonction des différentes missions à assurer par le mobile porteur.

Il est également connu d'effectuer une installation de moindre précision mécanique de fixation, mais d'obtenir une mesure précise du positionnement de l'équipement embarqué, ou de chaque panneau antennaire de l'équipement embarqué dans le cas d'un système radar à multiples panneaux antennaires. Une telle mesure précise est ensuite utilisée pour effectuer une compensation numérique dans le système de radar.

On connaît par exemple des méthodes qui utilisent l'acquisition de plusieurs images ou de plusieurs cibles (ou mires) par le système de radar, et l'application de traitements numériques pour calculer la position et/ou l'orientation du système embarqué dans un référentiel du porteur qui est par exemple fourni par une centrale inertielle du porteur. De telles méthodes ont l'avantage de fournir des résultats automatiquement, mais sont dépendantes de l'environnement du porteur, et ne permettent pas d'obtenir des résultats satisfaisants en toute circonstance. Par exemple, lorsque des mires optiques sont utilisées, il est nécessaire d'effectuer des mesures au sol, dans une procédure d'harmonisation, ce qui est particulièrement fastidieux en cas de démontage et remontage des systèmes de radar sur un porteur mobile.

Le brevet US 5 050 087 A décrit un procédé et un système pour calculer l'attitude d'un aéronef.

L'invention a pour objet de remédier aux inconvénients de l'état de la technique, et fournir un procédé et un système d'harmonisation automatique de position et/ou d'orientation entre un équipement embarqué sur un porteur mobile et un référentiel dudit porteur mobile adapté à fonctionner indépendamment de l'environnement du porteur.

A cet effet, l'invention propose un système automatique de position et/ou d'orientation entre un équipement embarqué sur un porteur mobile et un référentiel dudit porteur mobile selon la revendication 1.

Avantageusement, le système d'harmonisation automatique de position et/ou d'orientation entre un équipement embarqué sur un porteur mobile et un référentiel du porteur mobile met en oeuvre des calculs sur des mesures effectuées d'une part par la centrale inertielle embarquée sur le porteur, d'autres part par le ou les accéléromètres fixés sur l'équipement embarqué, sans nécessiter d'autres mesures ou réglages.

Le système d'harmonisation automatique selon l'invention peut également présenter une ou plusieurs des caractéristiques des revendications dépendantes 2 ou 3, prises indépendamment ou selon toutes les combinaisons techniquement envisageables :

Selon un autre aspect, l'invention concerne un procédé d'harmonisation automatique de position et/ou d'orientation entre un équipement embarqué sur un porteur mobile et un référentiel du porteur mobile selon la revendication 4.

Le procédé d'harmonisation automatique selon l'invention peut également présenter une ou plusieurs des caractéristiques des revendications 5 à 9, prises indépendamment ou selon toutes les combinaisons techniquement envisageables.

Selon un autre aspect, l'invention concerne un programme d'ordinateur selon la revendication 10..

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 illustre schématiquement un système d'harmonisation automatique de position et/ou d'orientation entre un équipement embarqué sur un porteur mobile et un référentiel du porteur mobile selon un mode de réalisation de l'invention ;

[Fig 2] la figure 2 illustre schématiquement un exemple de référentiel du porteur mobile et de référentiel de l'équipement embarqué ;

[Fig 3] la figure 3 est un logigramme des principales étapes d'un procédé d'harmonisation automatique de position et/ou d'orientation entre un équipement embarqué sur un porteur mobile et un référentiel du porteur mobile selon un mode de réalisation de l'invention.

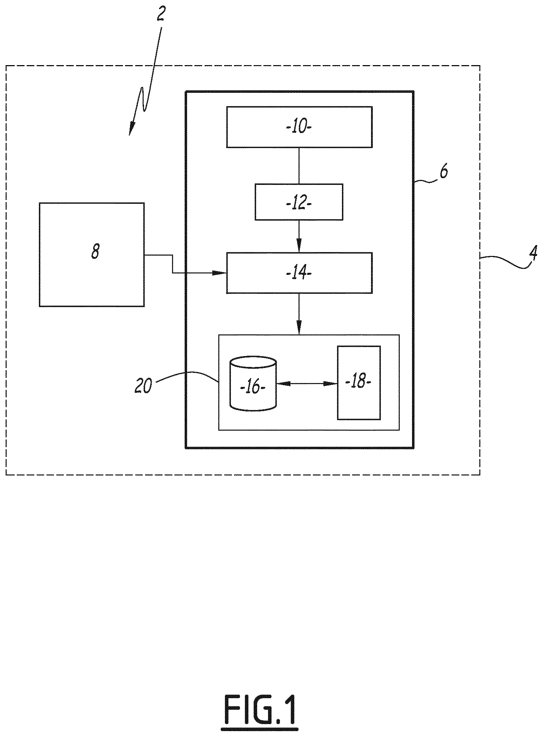

La figure 1 illustre schématiquement un système d'harmonisation automatique 2 de position et/ou d'orientation entre un équipement embarqué 6 sur un porteur mobile 4 et un référentiel du porteur mobile.

Le porteur mobile 4 est par exemple un aéronef, tel qu'un hélicoptère.

L'équipement embarqué 6 est par exemple un système de radar.

Le porteur mobile 4 comporte en outre une centrale inertielle 8 (en anglais « *Inertial Measurement Unit* ») qui est un instrument de navigation qui fournit, de manière connue, des mesures de données inertielles du porteur, comprenant des données d'accélération et de vitesse angulaire de rotation du porteur mobile. Ces données inertielles sont fournies dans un référentiel tridimensionnel lié au porteur mobile 4, sous forme de vecteur d'accélération et de vecteur de vitesses angulaires de rotation du porteur mobile. Les données inertielles obtenues des mesures fournies par la centrale inertielle sont utilisées de manière classique en navigation pour estimer l'orientation (angles de roulis, de tangage et de cap) du porteur mobile, sa vitesse linéaire et sa position relative.

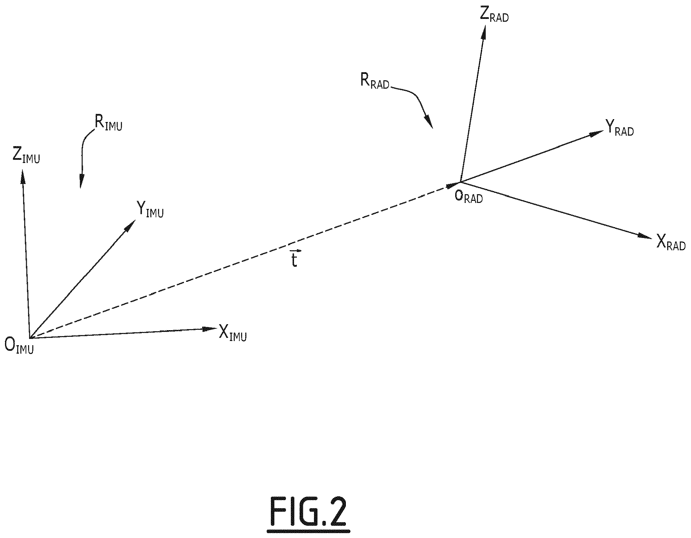

Le référentiel tridimensionnel lié au porteur mobile, également appelé ci-après référentiel IMU et noté $R_{IMU}$, illustré à la figure 2, comporte un centre $O_{IMU}$ et trois axes orthogonaux notés respectivement $X_{IMU}$, $Y_{IMU}$, $Z_{IMU}$.

Le système de radar embarqué 6 comporte un ou plusieurs panneaux antennaires 10, chaque panneau antennaire ayant un centre d'émission et de réception de signaux radioélectriques, appelé ci-après centre de phase du panneau antennaire, qui est un point de référence du panneau antennaire 10. Le ou chaque panneau antennaire 10 est positionné sur le porteur mobile 2.

Pour simplifier l'explication, un seul panneau antennaire 10 est considéré dans le mode de réalisation illustré à la figure 1.

Le panneau antennaire 10 est couplé mécaniquement à un accéléromètre 12 à trois axes, par exemple un accéléromètre à base de MEMS. Avantageusement, un tel composant est disponible « sur étagère » et peu coûteux.

Lorsque le système de radar 6 comporte plusieurs panneaux antennaires, un accéléromètre est couplé mécaniquement à chaque panneau antennaire.

L'accéléromètre 12 à trois axes est un capteur permettant de mesurer l'accélération linéaire de son porteur, ici le panneau antennaire 10, selon trois axes prédéfinis. L'accéléromètre 12 a un référentiel associé, appelé référentiel d'équipement embarqué, noté $R_{RAD}$ dans l'exemple schématique de la figure 2, et comporte un centre $O_{RAD}$ et trois axes orthogonaux notés respectivement $X_{RAD}$, $Y_{RAD}$, $Z_{RAD}$.

L'accéléromètre 12 fournit des mesures de données d'accélération 3 axes sous forme de vecteurs d'accélération $A_{RAD}$ dans le référentiel de l'équipement embarqué $R_{RAD}$.

De préférence, l'accéléromètre 12 est installé de sorte que le centre $O_{RAD}$ du référentiel associé soit proche, par exemple à une distance de l'ordre de quelques centimètres, de préférence inférieure à 10 cm, du centre de phase du panneau antennaire 10. Lorsque l'installation de l'accéléromètre 12 couplé mécaniquement au panneau antennaire 10 est effectuée lors de la fabrication, le positionnement de l'accéléromètre 12 est réalisé avec précision et la réponse de l'accéléromètre peut être calibrée lors de cette phase d'installation de manière à compenser d'éventuelles erreurs de décalage entre le centre du référentiel $O_{RAD}$ et le centre de phase du panneau antennaire. De préférence, en complément, il est également prévu d'harmoniser l'axe de visée du panneau antennaire 10 avec le référentiel $R_{RAD}$. L'harmonisation de l'axe de visée radioélectrique consiste à aligner au mieux l'axe du faisceau radar, qui est proche de la normale au panneau antennaire 10, et l'axe correspondant du référentiel $R_{RAD}$ l'accéléromètre. Si cet alignement est imparfait, l'écart d'alignement est estimé pour pouvoir le compenser. Des procédures classiques d'alignement de l'axe du faisceau radar avec l'axe correspondant du référentiel de l'accéléromètre sont connues.

Le système de radar 6, et de manière plus générale l'équipement embarqué, comprend une unité de réception 14 adaptée pour recevoir des données inertielles fournies par la centrale inertielle 8, ainsi que des données d'accélération fournies par l'accéléromètre 12, à des instants de mesure successifs.

Les données inertielles fournies par la centrale inertielle 8, ainsi que des données d'accélération fournies par l'accéléromètre 12 et les instants de mesure associés sont fournies à un dispositif électronique programmable 20, et sont mémorisées dans une unité électronique de mémorisation 16 de ce dispositif, adaptée à stocker des données.

Le dispositif électronique programmable 20 comporte également une unité de calcul 18, par exemple un processeur, apte à exécuter des instructions de code exécutable lorsque le dispositif électronique programmable 20 est mis sous tension. En particulier, le processeur 18 est configuré pour exécuter un programme d'ordinateur comportant instructions de code exécutable pour mettre en oeuvre un procédé d'harmonisation automatique selon l'invention, tel que décrit par la suite.

Le programme d'ordinateur est par exemple enregistré sur un support d'informations non volatile, lisible par un ordinateur. A titre d'exemple, le support d'informations lisible par ordinateur est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

Selon une variante, le dispositif programmable 20 est réalisé sous forme de carte programmée de type ASIC ou FPGA.

La figure 2, déjà mentionnée, illustre schématique les référentiels $R_{IMU}$ lié à la centrale inertielle du porteur, et $R_{RAD}$ de l'équipement embarqué. Dans le cas général, une transformation géométrique, dite transformation géométrique de passage, comportant une translation et une rotation permet de passer de l'un à l'autre de ces référentiels. Par exemple, on considère la transformation géométrique permettant de passer du référentiel de l'équipement embarqué $R_{RAD}$ au référentiel du porteur $R_{IMU}$.

La translation est définie par un vecteur de translation $\vec{t}$ de coordonnées $(t_x, t_y, t_z)$ dans le référentiel $R_{IMU}$, qui relie les centres $O_{IMU}$ et $O_{RAD}$ des référentiels.

La rotation est définie par une matrice de rotation, composée de trois matrices de rotations élémentaires correspondant à trois rotations successives d'angles $\theta_x$, $\theta_y$ et $\theta_z$ par rapport aux axes du référentiel $R_{IMU}$ par exemple. Les angles $\theta_x$, $\theta_y$ et $\theta_z$ sont représentatifs de l'orientation du référentiel de l'équipement embarqué, par exemple du panneau antennaire considéré, par rapport au référentiel du porteur mobile.

La matrice de rotation s'exprime de la manière suivante :

[MATH 1]

$$ROT = \begin{bmatrix} r_{11} & r_{12} & r_{13} \\ r_{21} & r_{22} & r_{23} \\ r_{31} & r_{32} & r_{33} \end{bmatrix}$$

Où :

$$r_{11} = \cos(\theta_x)\cos(\theta_y)$$

$$r_{12} = \cos(\theta_x)\sin(\theta_y)\sin(\theta_z) - \sin(\theta_x)\cos(\theta_z)$$

$$r_{13} = \cos(\theta_x)\sin(\theta_y)\cos(\theta_z) + \sin(\theta_x)\sin(\theta_z)$$

$$r_{21} = \sin(\theta_x)\cos(\theta_y)$$

$$r_{22} = \sin(\theta_x)\sin(\theta_y)\sin(\theta_z) + \cos(\theta_x)\cos(\theta_z)$$

$$r_{23} = \sin(\theta_x)\sin(\theta_y)\cos(\theta_z) - \cos(\theta_x)sin(\theta_z)$$

$$r_{31} = -\sin(\theta_y)$$

$$r_{32} = \cos(\theta_y)sin(\theta_z)$$

$$r_{33} = \cos(\theta_y)\cos(\theta_z)$$

Ainsi, la transformation géométrique de passage permettant de relier les deux référentiels est définie par 6 paramètres, qui sont respectivement les coordonnées $(t_x, t_y, t_z)$ du vecteur de translation et les valeurs d'angles de rotation $\theta_x$, $\theta_y$ et $\theta_z$.

Les valeurs de ces paramètres sont obtenues par résolution d'un système d'équations en utilisant des données inertielles fournies par la centrale inertielle du porteur et des données d'accélération fournies par l'accéléromètre pour au moins deux orientations de vol différentes.

Le système d'équations est obtenu par l'expression d'un vecteur d'accélération de l'équipement embarqué,

fourni par l'accéléromètre, dans le référentiel du porteur mobile et par l'expression dudit vecteur d'accélération du porteur embarqué dans le référentiel du porteur mobile à partir de données inertielles fournies par la centrale inertielle dans le référentiel du porteur mobile, comme expliqué plus en détail ci-dessous.

Le vecteur d'accélération de l'équipement embarqué s'exprime dans le référentiel du porteur $R_{IMU}$ par l'équation suivante, qui met en oeuvre des données inertielles fournies par la centrale inertielle :

[MATH 2]

$$\vec{A}_{RAD/R_{IMU}} = \vec{A}_{IMU} + \vec{\omega} \wedge \vec{t} \wedge \vec{\omega} + \vec{t} \wedge \dot{\vec{\omega}}$$

Où $\vec{A}_{IMU}$ est le vecteur d'accélération du porteur mobile fourni par la centrale inertielle et $\vec{\omega}$ est le vecteur de vitesses angulaires de rotation du porteur mobile fourni par la centrale inertielle, $\vec{t}$ est le vecteur de translation entre les centres de deux référentiels, et $\dot{\vec{\omega}}$ est le vecteur dérivé du vecteur $\vec{\omega}$ de vitesses angulaires de rotation. Le vecteur $\dot{\vec{\omega}}$ est déterminé par exemple en estimant une dérivée du vecteur $\vec{\omega}$ par rapport au temps. L'opérateur $\wedge$ désigne le produit vectoriel dans l'espace tridimensionnel.

D'autre part, l'accéléromètre fournit un vecteur d'accélération dans le référentiel $R_{RAD}$ de l'équipement embarqué, qui est transposable dans le référentiel du porteur $R_{IMU}$ en appliquant la matrice de rotation ROT définie par la formule [MATH 1] ci-dessus, par l'expression suivante :

[MATH 3]

$$\vec{A}_{RAD/R_{IMU}} = ROT \cdot \vec{A}_{RAD/R_{RAD}}$$

Le procédé d'harmonisation met en oeuvre la résolution d'un système d'équations à 6 inconnues, qui sont les paramètres de la transformation géométrique de passage, formé à partir de l'égalité déduite des formules [MATH 2] et [MATH 3] ci-dessus, pour au moins deux mesures effectuées par la centrale inertielle et l'accéléromètre pour des orientations de vol différentes, en effectuant des manoeuvres de vol différentes.

La résolution du système d'équations pour obtenir les valeurs des inconnues est mise en oeuvre par calcul, et n'est pas décrite en détail ici car toute méthode calculatoire de résolution d'un système d'équations numériques est applicable. A titre d'exemple non limitatif on peut utiliser la méthode du pivot de Gauss ou une méthode d'inversion matricielle.

De préférence, plusieurs manoeuvres correspondant à des orientations de vol différentes sont mises en oeuvre, de manière à obtenir, par la centrale inertielle et par l'accéléromètre, des mesures suffisamment indépendantes pour permettre d'affiner la précision de la résolution du système d'équations mis en oeuvre, et par conséquent, d'affiner l'harmonisation mise en oeuvre.

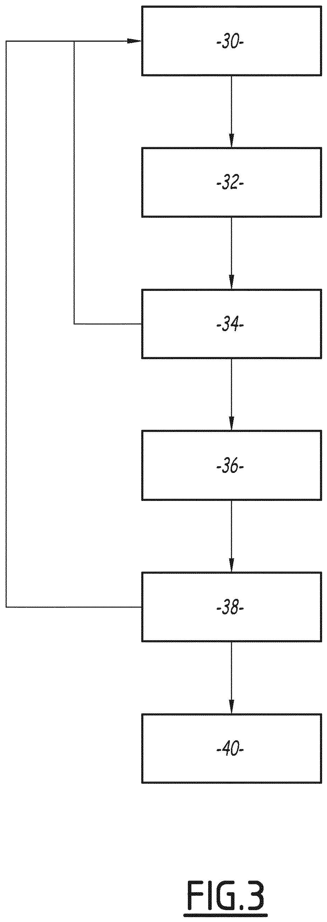

Un mode de réalisation d'un procédé d'harmonisation automatique de position et/ou d'orientation entre un équipement embarqué sur un porteur mobile et un référentiel dudit porteur mobile est illustré schématiquement à la figure 3.

Le procédé comporte une étape 30 de commande de manoeuvre de vol dans une liste prédéterminée de manoeuvres de vol à effectuer. L'étape de commande est soit mise en oeuvre par un pilote du mobile porteur, soit mise en oeuvre par un système de pilotage automatique dans une phase d'harmonisation automatique.

De préférence, la liste prédéterminée de manoeuvres de vol est ordonnée. Par exemple, lorsque le porteur mobile est un hélicoptère, la liste comporte les manoeuvres de vol listées M1 à M6 suivantes :

- M1 : accélération verticale ;
- M2 : accélération frontale ;
- M3 : accélération latérale;
- M4 : rotation en cap sur place ;
- M5 : tangage sur place ;
- M6 : roulis sur place.

Avantageusement, les manoeuvres de vol listées sont choisies pour optimiser l'indépendance des mesures réalisées.

En variante, la manoeuvre M3 d'accélération latérale est remplacée par une manoeuvre de virage quasiment circulaire à vitesse constante, qui permet d'obtenir une information d'accélération latérale couplée à une rotation propre du porteur.

L'étape 30 de commande de manoeuvre de vol est suivie d'une étape 32 de réception et mémorisation des données inertielles fournies par la centrale inertielle, et d'une indication temporelle associée, par exemple un instant de mesure.

Le procédé comporte également une étape 34 de réception et mémorisation des données d'accélération fournies par l'accéléromètre considéré, et d'une indication temporelle associée, par exemple un instant de mesure.

Les étapes 32 et 34 sont de préférence effectuées simultanément pour rendre compte d'une même orientation de vol suite à une manoeuvre commandée.

Les étapes 30 à 34 sont répétées, dans un mode de réalisation, pour toutes les manoeuvres de vol M1 à M6 listées.

En variante, les étapes 30 à 34 sont répétées pour un sous-ensemble des manoeuvres de la liste prédéterminée de manoeuvres de vol, par exemple, pour les manoeuvres M1 à M3 à angles de rotation nuls, ce qui permet de supprimer la contribution des inconnues relatives au vecteur de translation $\vec{t}$ et les composantes liées aux rotations propres de l'appareil.

Les étapes 32, 34 sont suivies d'une étape 36 de calcul de valeurs de paramètres de la transformation géométrique entre référentiels, sur la base de la résolution du système d'équations décrit ci-dessus.

Dans le cas où un sous-ensemble de manoeuvres de vol a été effectué, un sous-ensemble des valeurs de paramètres est obtenu, par exemple les valeurs d'angles de rotation $\theta_x$, $\theta_y$ et $\theta_z$.

L'étape 36 est suivie d'une étape 38 de mémorisation des valeurs des paramètres de transformation calculées.

L'étape 38 est optionnellement suivie d'un retour à l'étape 30 pour effectuer d'autres manoeuvres de vol de la liste prédéterminée de manoeuvres de vol, permettant d'affiner les valeurs des paramètres calculées.

Par exemple, les étapes 30 à 34 sont répétées pour un deuxième sous-ensemble des manoeuvres de la liste prédéterminée de manoeuvres de vol, par exemple, les manoeuvres M4 à M6 comportant des accélérations angulaires selon les 3 axes de rotation du porteur mobile. Après l'acquisition et la mémorisation des données inertielles et des données d'accélération de l'accéléromètre pour des manoeuvres de vol, les étape 36 et 38 sont également répétées.

Finalement, les valeurs des paramètres de la transformation géométrique entre référentiels mémorisées sont utilisées lors de l'étape d'utilisation 40.

L'utilisation comprend par exemple pour la compensation par calcul des mouvements du porteur mobile dans le calcul de la direction de l'axe de visée du panneau antennaire considéré du système de radar, et la correction de l'affichage des données issues du système de radar par rapport au porteur mobile.

Lorsque le système de radar comporte plusieurs panneaux antennaires, chacun ayant un accéléromètre couplé mécaniquement au panneau, les étapes 34 à 38 sont effectuées pour chaque panneau antennaire.

L'étape d'utilisation 40 met en oeuvre, dans certaines utilisations, les paramètres de transformation géométrique calculés pour chaque panneau antennaire. Par exemple, dans le cas d'un système de radar à multiples panneaux antennaires, les informations de position et d'orientation de plusieurs panneaux antennaires fournies automatiquement par le procédé de l'invention sont utilisées pour déterminer la configuration géométrique du radar sur le porteur, sans nécessiter une identification manuelle ou logicielle.

Dans un autre mode de réalisation, les valeurs des paramètres de la transformation géométrique de passage, et par conséquent la position et l'orientation de l'équipement embarqué, par exemple de chaque panneau antennaire du système de radar, sont affinées en cours de vol. Avantageusement, cela permet de compenser d'éventuelles déformations subies par le porteur ou par l'équipement embarqué en cours d'utilisation.

Dans une variante sous-optimale, seules les valeurs d'angles de rotation définissant l'orientation de l'équipement embarqué, par exemple de chaque panneau antennaire du système de radar, sont calculés.

L'invention a été décrite ci-dessus dans sa réalisation utilisant un accéléromètre à trois axes pour chaque équipement embarqué pour lequel l'harmonisation de position et/ou d'orientation est recherchée. Dans une variante sous-optimale, un accéléromètre à un ou deux axes seulement est utilisé.

Dans une autre variante, outre le couplage mécanique d'accéléromètres à l'équipement embarqué, il prévu d'ajouter un couplage de gyromètre, permettant ainsi de réaliser une centrale inertielle par équipement embarqué, et donc d'affiner les résultats d'harmonisation, au prix d'un coût plus élevé.

L'invention a été décrite ci-dessus dans le cas particulier où l'équipement embarqué est un système de radar, mais elle s'applique également à d'autres équipements embarqués, par exemple capteur optronique, sonar, capteur acoustique, sans être limitée à ces équipements.

Avantageusement, l'invention permet d'obtenir automatiquement des paramètres définissant la position et/ou l'orientation d'un équipement embarqué sur un porteur mobile dans un référentiel dudit porteur mobile, avec un nombre limité de manoeuvres de vol, et sans nécessiter une installation précise de l'équipement embarqué.

Avantageusement, le remplacement des équipements embarqués, par exemple de certains panneaux antennaires pour un système de radar, ne nécessite pas de calibration manuelle.

**Revendications**

1. Système d'harmonisation automatique de position et/ou d'orientation entre un équipement embarqué (6, 10) sur un porteur mobile (4) et un référentiel ($R_{IMU}$) dudit porteur mobile, ledit porteur mobile (4) étant équipé d'une centrale inertielle (8) adaptée à fournir des mesures d'accélération et de vitesse angulaire de rotation dudit porteur mobile dans ledit référentiel, **caractérisé en ce qu'**il comporte :

   - au moins un accéléromètre (12) mécaniquement couplé à l'équipement embarqué (6, 10), et fournissant des mesures d'accélération dans un référentiel dit de l'équipement embarqué ($R_{RAD}$) associé, ledit accéléromètre (12) étant un accéléromètre adapté à fournir des mesures d'accélération selon trois axes spatiaux ;
   - une unité de réception (14) configurée pour recevoir des mesures fournies par ladite centrale inertielle (8) et des mesures fournies par l'accéléromètre (12),
   - une unité de calcul (20) configurée pour calculer des valeurs de paramètres définissant une transformation géométrique de passage entre le référentiel ($R_{IMU}$) du porteur et le référentiel ($R_{RAD}$) de l'équipement embarqué, à partir desdites mesures, effectuées pour au moins deux orientations de vol différentes, par ladite centrale inertielle (8) et par ledit accéléromètre (12), dans lequel ledit porteur mobile (4) est un aéronef, ledit équipement embarqué (6) est un système de radar comportant au moins un panneau antennaire (10), le ou chaque panneau antennaire (10) ayant un centre de phase associé, et comportant un accéléromètre couplé (12) mécaniquement au panneau antennaire (10) et ayant un référentiel ($R_{RAD}$) centré sur ledit centre de phase.

2. Système selon la revendication 1, dans lequel la transformation géométrique de passage comprend une rotation et une translation, la rotation étant définie par trois angles de rotation et la translation étant définie par un vecteur de translation.

3. Système selon la revendication 2, dans lequel le calcul de valeurs de paramètres est effectué par résolution numérique d'un système d'équations mettant en oeuvre une matrice de rotation définissant ladite rotation et ledit vecteur de translation.

4. Procédé d'harmonisation automatique de position et/ou d'orientation entre un équipement embarqué sur un porteur mobile et un référentiel dudit porteur mobile, mis en oeuvre par un système d'harmonisation conforme aux revendications 1 à 3, et comportant des étapes, pour au moins deux manoeuvres de vol correspondant à deux orientations de vol différentes, de :

   - réception et mémorisation (32) de données inertielles obtenues des mesures fournies par la centrale inertielle dans un référentiel de la centrale inertielle;
   - réception et mémorisation (34) de données d'accélération obtenues des mesures fournies par un accéléromètre dans un référentiel de l'équipement embarqué associé audit accéléromètre;
   - calcul (36) de valeurs de paramètres définissant une transformation géométrique de passage entre le référentiel ($R_{IMU}$) du porteur et le référentiel ($R_{RAD}$) de l'équipement embarqué en utilisant lesdites données inertielles et données d'accélération mémorisées.

5. Procédé selon la revendication 4, dans lequel le calcul de valeurs de paramètres est effectué par résolution numérique d'un système d'équations mettant en oeuvre une matrice de rotation et un vecteur de translation définissant ladite transformation géométrique de passage.

6. Procédé selon la revendication 5, dans lequel ledit système d'équations est obtenu par l'expression d'un vecteur d'accélération de l'équipement embarqué, fourni par l'accéléromètre, dans le référentiel du porteur mobile et par l'expression dudit vecteur d'accélération du porteur embarqué dans le référentiel du porteur mobile à partir de données inertielles fournies par la centrale inertielle dans le référentiel du porteur mobile.

7. Procédé selon la revendication 6, dans lequel les données inertielles comprennent un vecteur d'accélération du porteur mobile et un vecteur de vitesses angulaires de rotation du porteur mobile dans le référentiel du porteur mobile.

8. Procédé selon la revendication 6 ou 7, dans lequel l'expression d'un vecteur d'accélération de l'équipement embarqué fourni par l'accéléromètre dans le référentiel du porteur mobile, met en oeuvre ladite matrice de rotation.

9. Procédé selon l'une quelconque des revendications 4 à 8, mis en oeuvre pour une pluralité de manoeuvres de vol listées dans une liste de manoeuvres de vol, comportant un premier sous-ensemble de manoeuvres de vol à angles de rotation nuis et un deuxième sous-ensemble de manoeuvres de vol comportant des accélérations angulaires du porteur mobile.

10. Programme d'ordinateur comportant des instructions logicielles qui, lorsqu'elles sont exécutées par un ordinateur, mettent en oeuvre un procédé d'harmonisation automatique de position et/ou d'orientation entre un équipement embarqué sur un porteur mobile et un référentiel dudit porteur mobile selon la revendication 4.

**Patentansprüche**

1.  System zur automatischen Harmonisierung der Position und/oder Ausrichtung zwischen einer On-Board-Ausrüstung (6, 10) auf einem mobilen Träger (4) und einem Bezugssystem ($R_{IMU}$) des mobilen Trägers, wobei der mobile Träger (4) mit einer Trägheitszentrale (8) ausgestattet ist, die dazu geeignet ist, Messungen der Beschleunigung und der Rotationswinkelgeschwindigkeit des mobilen Trägers in dem Bezugssystem zu liefern, **dadurch gekennzeichnet, dass** es umfasst:

    - mindestens einen Beschleunigungsmesser (12), der an die On-Board-Ausrüstung (6, 10) mechanisch gekoppelt ist und Messungen der Beschleunigung in einem Bezugssystem der zugehörigen On-Board-Ausrüstung ($R_{RAD}$) liefert, wobei der Beschleunigungsmesser (12) ein Beschleunigungsmesser ist, der dazu geeignet ist, Messungen der Beschleunigung entlang dreier Raumachsen zu liefern;
    - eine Empfangseinheit (14), die dazu ausgelegt ist, die von der Trägheitszentrale (8) gelieferten Messungen und die vom Beschleunigungsmesser (12) gelieferten Messungen zu empfangen,
    - eine Recheneinheit (20), die dazu ausgelegt ist, Parameterwerte zu berechnen, die eine geometrische Übergangtransformation zwischen dem Bezugssystem ($R_{IMU}$) des Trägers und dem Bezugssystem ($R_{RAD}$) der On-Board-Ausrüstung ausgehend von den Messungen zu definieren, die für mindestens zwei verschiedene Flugausrichtungen von der Trägheitszentrale (8) und von dem Beschleunigungsmesser (12) durchgeführt werden, wobei der mobile Träger (4) ein Flugzeug ist, die On-Board-Ausrüstung (6) ein Radarsystem mit mindestens einer Antennenplatte (10) ist, wobei die oder jede Antennenplatte (10) ein zugeordnetes Phasenzentrum hat, und einen Beschleunigungsmesser (12) aufweist, der mechanisch an die Antennenplatte (10) gekoppelt ist und ein auf das Phasenzentrum zentriertes Bezugssystem ($R_{RAD}$) hat.

2.  System nach Anspruch 1, wobei die geometrische Übergangstransformation eine Rotation und eine Translation umfasst, wobei die Rotation durch drei Rotationswinkel definiert ist und die Translation durch einen Translationsvektor definiert ist.

3.  System nach Anspruch 2, wobei die Berechnung von Parameterwerten durch numerische Lösung eines Gleichungssystems erfolgt, das eine Rotationsmatrix implementiert, die die Rotation und den Translationsvektor definiert.

4.  Verfahren zur automatischen Harmonisierung der Position und/oder Ausrichtung zwischen einer On-Board-Ausrüstung auf einem mobilen Träger und einem Bezugssystem des mobilen Trägers, das von einem Harmonisierungssystem nach den Ansprüchen 1 bis 3 durchgeführt wird und für mindestens zwei Flugmanöver, die zwei verschiedenen Flugausrichtungen entsprechen, folgende Schritte umfasst:

    - Empfangen und Speichern (32) von Trägheitsdaten, die aus den von der Trägheitszentrale gelieferten Messungen in einem Bezugssystem der Trägheitszentrale erhalten werden;
    - Empfangen und Speichern (34) von Beschleunigungsdaten, die aus Messungen erhalten werden, die von einem Beschleunigungsmesser in einem Bezugssystem der dem Beschleunigungsmesser zugeordneten On-Board-Ausrüstung geliefert werden;
    - Berechnen (36) von Parameterwerten, die eine geometrische Übergangtransformation zwischen dem Bezugssystem ($R_{IMU}$) des Trägers und dem Bezugssystem ($R_{RAD}$) der On-Board-Ausrüstung unter Verwendung der gespeicherten Trägheitsdaten und Beschleunigungsdaten definieren.

5.  Verfahren nach Anspruch 4, wobei die Berechnung von Parameterwerten durch numerische Lösung eines Gleichungssystems erfolgt, das eine Rotationsmatrix und einen Translationsvektor implementiert, die die geometrische Übergangtransformation definieren.

6.  Verfahren nach Anspruch 5, wobei das Gleichungssystem durch den Ausdruck eines Beschleunigungsvektors der On-Board-Ausrüstung, der vom Beschleunigungsmesser geliefert wird, im Bezugssystem des mobilen Trägers und durch den Ausdruck des Beschleunigungsvektors des On-Board-Trägers im Bezugssystem des mobilen Trägers aus Trägheitsdaten, die von der Trägheitszentrale im Bezugssystem des mobilen Trägers geliefert werden, erhalten wird.

**7.** Verfahren nach Anspruch 6, wobei die Trägheitsdaten einen Beschleunigungsvektor des mobilen Trägers und einen Rotationswinkelgeschwindigkeitsvektor des mobilen Trägers in dem Bezugssystem des mobilen Trägers umfassen.

**8.** Verfahren nach Anspruch 6 oder 7, wobei der Ausdruck eines Beschleunigungsvektors der On-Board-Ausrüstung, der vom Beschleunigungsmesser im Bezugssystem des mobilen Trägers geliefert wird, die Rotationsmatrix implementiert.

**9.** Verfahren nach einem der Ansprüche 4 bis 8, das für eine Vielzahl von Flugmanövern durchgeführt wird, die in einer Flugmanöverliste aufgeführt sind, die eine erste Teilmenge von Flugmanövern mit Rotationswinkeln Null und eine zweite Teilmenge von Flugmanövern mit Winkelbeschleunigungen des mobilen Trägers aufweist.

**10.** Rechnerprogramm mit Softwarebefehlen, die, wenn sie von einem Rechner ausgeführt werden, ein Verfahren zur automatischen Harmonisierung der Position und/oder Ausrichtung zwischen einer On-Board-Ausrüstung auf einem mobilen Träger und einem Bezugssystem des mobilen Trägers nach Anspruch 4 implementieren.

**Claims**

**1.** A system for automatically harmonizing the position and/or orientation between an apparatus (6, 10) on board a mobile carrier (4) and a reference frame ($R_{IMU}$) of said mobile carrier, said mobile carrier (4) being equipped with an inertial unit (8) able to provide measurements of acceleration and angular velocity of rotation of said mobile carrier in said reference frame, **characterized in that** it includes:

- at least one accelerometer (12) mechanically coupled to the onboard apparatus (6, 10), and providing acceleration measurements in a reference frame ($R_{RAD}$) referred to as the associated onboard apparatus, said accelerometer (12) being an accelerometer able to provide acceleration measurements along three spatial axes;
- a reception unit (14) configured to receive measurements provided by said inertial unit (8) and measurements provided by the accelerometer (12),
- a computing unit (20) configured to calculate values of parameters defining a geometric transformation for conversion of data between the reference frame ($R_{IMU}$) of the carrier and the reference frame ($R_{RAD}$) of the onboard apparatus, from said measurements, carried out for at least two different flight orientations, by said inertial unit (8) and by said accelerometer (12), wherein said mobile carrier (4) is an aircraft, said onboard apparatus (6) is a radar system including at least one antenna panel (10), the or each antenna panel (10) having an associated phase center, and including an accelerometer mechanically coupled (12) to the antenna panel (10) and having a reference frame ($R_{RAD}$) centered on said phase center.

**2.** The system according to claim 1, wherein the geometric transformation for conversion of data comprises a rotation and a translation, the rotation being defined by three rotation angles and the translation being defined by a translation vector.

**3.** The system according to claim 2, wherein the calculation of parameter values is performed by digitally solving a system of equations implementing a rotation matrix defining said rotation and said translation vector.

**4.** A method for automatically harmonizing the position and/or orientation between an apparatus on board a mobile carrier and a reference frame of said mobile carrier, implemented by a harmonization system in accordance with claims 1 to 3, and including the steps, for at least two flight maneuvers corresponding to two different flight orientations of:

- receiving and storing (32) inertial data obtained from measurements provided by the inertial unit in a reference frame of the inertial unit;
- receiving and storing (34) acceleration data obtained from measurements provided by an accelerometer in a reference frame of the onboard apparatus associated with said accelerometer;
- calculating (36) parameters values defining a geometric transformation for conversion of data between the reference frame ($R_{IMU}$) of the carrier and the reference frame ($R_{RAD}$) of the onboard apparatus using said stored inertial data and acceleration data.

5. The method according to claim 4, wherein the calculation of parameter values is performed by numerically solving a system of equations implementing a rotation matrix and a translation vector defining said geometric transformation for conversion of data

6. The method according to claim 5, wherein said system of equations is obtained by expressing an acceleration vector of the onboard apparatus, provided by the accelerometer, in the reference frame of the mobile carrier and by expressing said acceleration vector of the onboard carrier in the reference frame of the mobile carrier from inertial data provided by the inertial unit in the reference frame of the mobile carrier.

7. The method according to claim 6, wherein the inertial data comprises an acceleration vector of the mobile carrier and a vector of rotational angular velocities of the mobile carrier in the reference frame of the mobile carrier.

8. The method according to claim 6 or 7, wherein expressing an acceleration vector of the onboard apparatus provided by the accelerometer in the reference frame of the mobile carrier implements said rotation matrix.

9. The method according to any one of claims 4 to 8, implemented for a plurality of flight maneuvers listed in a flight maneuver list, including a first subset of zero angle of rotation flight maneuvers and a second subset of flight maneuvers including angular accelerations of the mobile carrier.

10. A computer program including software instructions which, when executed by a computer, implements a method for automatic harmonization of position and/or orientation according to claim 4.

FIG.1

FIG.2

FIG.3

**EP 4 066 007 B1**